# EUROPÄISCHE PATENTANMELDUNG

(11) **EP 2 489 646 A1**
(43) Veröffentlichungstag der Anmeldung: **22.08.2012**
(21) Anmeldenummer: 11009978.5
(22) Anmeldetag: 19.12.2011
(51) Int. Cl.: C04B 14/30, C04B 28/02

(54) **Verfahren zur Herstellung einer photokatalytisch aktiven Betontrockenmischung**

(30) Priorität: 22.12.2010 DE 102010055540
(71) Anmelder: Franz Carl Nüdling Basaltwerke GmbH + Co. KG, 36037 Fulda (DE)
(72) Erfinder: Tischer, Werner, Dr. rer. nat., 98634 Unterweid (DE); Klöppner, Bernhard, 36124 Eichenzell (DE)
(74) Vertreter: Ellberg, Nils

(57) **Zusammenfassung**

Photokatalytisch aktive Betontrockenmischungen werden beispielsweise zur Herstellung von Beton für die Herstellung von Formsteinen, wie insbesondere Pflastersteinen, verwendet. Als Zuschlag für eine Betontrockenmischung verwendete nanoskalige Partikel eines photoketalytisch aktiven Materials neigen üblicherweise zur Verklumpung bzw. Aggregation, wenn sie mit einem Bindemittel vermischt werden. Dadurch wird die aktive Oberfläche bei den bekannten Mischprozessen für Betontrockenmischungen herabgesetzt.

Die Erfindung beseitigt die Nachteile des Standes der Technik dadurch, dass die Hinzugabe des photokatalytisch aktiven Materials zu der Betontrockenmischung und insbesondere die Vermischung unabhängig vom Bindemittel erfolgt. Dies verringert die Neigung zu Verklumpungen,

## Beschreibung

Die Erfindung betrifft ein Verfahren zur Herstellung einer photokatalytisch aktiven Betontrockenmischung gemäß dem Oberbegriff des Anspruchs 1.

In jüngerer Zeit werden in zahlreichen Anwendungen sogenannte photokatalytisch aktive Materialien bzw. Photokatalysatoren eingesetzt. Diese zeichnen sich im Allgemeinen dadurch aus, dass sie in der Lage sind, in ihrer Umgebung und insbesondere auf ihrer Oberfläche befindliche Verunreinigungen bel Anwesenheit von ultravioletter Strahlung und gegebenenfalls Wasser zu zersetzen. Als primäre Quelle ultravioletter Strahlung kommt dabei Sonnenlicht in Betracht. Dementsprechend werden photokatalytisch aktive Materialien vorwiegend im Außenbereich eingesetzt.

Beton als Trägermaterial für photokatalytisch aktive Materialien weist dabei einerseits eine ausreichende Stabilität und Langlebigkeit gegenüber Krafteinwirkung, Abrieb und anderen Umwelteinflüssen auf und bietet andererseits vielfältigen Gestaltungsmöglichkeiten insbesondere bei der Formgebung und dem äußeren Erscheinungsbild. Vorzugsweise wird Beton daher als Material beispielsweise zur Herstellung von Formsteinen bzw. Pflastersteinen verwendet.

Im einfachsten Fall besteht der Werkstoff Beton zunächst aus einer sogenannten Betongrundrezeptur aus wenigen Komponenten. Dazu gehören insbesondere wenigstens ein Bindemittel, vorzugsweise Zement bzw. alternativ beispielsweise auch polymere Bindemittel und wenigstens ein Zuschlag- bzw. Füllstoff. vorzugsweise Sand oder ähnliches. Durch Zugabe von Wasser bindet der Beton ab und härtet damit aus. Dies wird durch die Reaktion des Bindemittels mit dem Wasser hervorgerufen. Da bei Zugabe von Wasser die chemische Reaktion direkt gestartet wird, ist es allgemein erforderlich, eine sogenannte Betontrockenmischung aus den Komponenten zur Herstellung des Betons einschließlich eventueller Zusatzstoffe herzustellen. Insbesondere photokatalytisch aktive Materialien können dabei Insbesondere als solche Zusatzstoffe in die Betontrockenmischung eingebracht werden.

Zum Durchmischen der Komponenten der Betontrockenmischung wie auch des Bindemittels bzw. des photokatalytisch aktiven Materials wird eine Mischvorrichtung, wie insbesondere ein sogenannter Hochleistungsmischer, verwendet. Dieser bzw. diesem werden die Komponenten der Betontrockenmischung entsprechend zum Vermischen zugeführt.

Um eine möglichst große aktive Oberfläche zu erhalten" ist es im Allgemeinen wünschenswert, das photokatalytisch aktive Material möglichst fein in der Betantrockenmischung und damit auch im späteren Beton zu verteilen. Aus dem Stand der Technik sind dazu zwei Vorgehensweisen bekannt. In einem Fall wird ein Gemisch aus dem Bindemittel und den photokatalytisch aktiven Material separat hergestellt und dann den übrigen Komponenten der Betontrockenmischung zugesetzt. Im anderen Fall wird das photokatalytisch aktive Material im Bindemittel möglichst gleichmäßig verteilt, indem es beispielsweise mit einer geringen Menge Wasser aufgeschlämmt und dann als sogenannte Schlämme (bzw. Slurry) dem Bindemittel zugegeben wird.

Nachteilig an den aus dem Stand der Technik bekannten Verfahren ist, dass die photokatalytisch aktiven Materialien insbesondere bei sehr feinkörnigen Ausführungen zu einer Klumpen- bzw. Aggregatbildung neigen, wenn sie wie oben beschrieben verarbeitet werden. Damit wird folglich die aktive Oberfläche deutlich reduziert.

Aufgabe der Erfindung ist es daher, ein Verfahren zur Herstellung einer photokatalytisch aktiven Betontrockenmischung anzugeben, bei dem die genannten Nachteile des Standes der Technik vermieden werden, also insbesondere eine Klumpen- bzw. Aggregatbildung verringert bzw. sogar verhindert wird,

Die Aufgabe der Erfindung wird gelöst durch ein Verfahren mit den Maßnahmen des Anspruchs 1. Demnach wird das photokatalytisch aktive Material der Betontrockenmischung unabhängig vom Bindemittel zugegeben. Eine separate Zugabe sorgt für eine Verringerung der durch das Bindemittel induzierten Klumpen- bzw. Aggregatbildung. Dabei erfolgt insbesondere ein separates Vermischen des photokatalytlsch aktiven Materials mit den übrigen Komponenten der Betontrockenmischung, also unabhängig vom Bindemittel. Insbesondere werden die Füll- bzw. Zuschlagstoffe separat einerseits mit dem Bindemittel und andererseits mit dem photokatalytisch aktiven Material vermischt.

Vorzugsweise wird das photokatalytisch aktive Material erst nach Zugabe des Bindemittels der Betontrockenmischung zugegeben. Weiter bevorzugt erfolgt die Zugabe erst nach dem Vermischen des Bindemittels mit den übrigen Komponenten der Betontrockenmischung. Schließlich werden besonders bevorzugt erst alle übrigen Komponenten der Betontrockenmischung miteinander vermischt, bevor das photokatalytisch aktive Material zugegeben wird. Auf jeden Fall wird bevorzugt zunächst für eine gleichmäßige Verteilung bzw. Vermischung des Bindemittels bzw. der übrigen Komponenten des Betontrockenmischung gesorgt, insbesondere vor Zugabe des photokatalytisch aktiven Materials. Auch bezüglich des photokatalytisch aktiven Materials wird insbesondere für eine ausreichende bzw. möglichst gleichmäßige Vermischung in der Bettirntrockenmischung gesorgt.

Das photokatalytisch aktive Material wird vorzugsweise In Form von Teilchen bzw. Partikeln zugegeben. Besonders bevorzugt handelt es sich dabei um Nanopartikel. Nanopartikel zeichnen sich durch Größenabmessungen im Nanobereich aus, d. h. üblicherweise aus dem Bereich von etwa 1 nm bis zu etwa 1 µm, also bis zu 1000 nm. Typische Teilchendurchmesser betragen dabei insbesondere allerdings einige Nanometer bis hin zu einigen zehn Nanometern, also in etwa zwischen 1 nm und 100 nm. In diesem Bereich ist üblicherweise das Verhältnis der aktiven Oberfläche zur Teilchengröße besonders günstig. Bevorzugt werden Partikel mit einer zumindest im Wesentlichen ähnlichen bzw. einheitlichen Partikelgröße eingesetzt. Dies bedeutet, dass die Teilchen insbesondere in etwa die gleichen Durchmesser im Falle von kugelähnlichen Teilchen und ansonsten in etwa ähnliche äußere Abmessungen aufweisen. Einheitliche Größen bzw. Abmessungen sorgen dafür, dass die Eigenschaften des photokatalytisch aktiven Materials auch in der Betontrockenmischung bzw. dem späteren Beton gut vorhersagbar und einheitlich sind. Möglicherweise kann aber eine Verwendung unterschiedlicher Teilchengrößen auch besondere und gegebenenfalls gewünschte Eigenschaften hervorrufen.

Das phötokatalytisch aktive Material bzw. die Partikel weisen eine sogenannte spezifische Oberfläche (BET) auf, die als Maß für die für Reaktionen bereitstehende Oberfläche dient. Die spezifische Oberfläche eines Materials lässt sich als sogenannte BET-Oberfläche, beispielsweise durch eine Adsorption von gasförmigem Stickstoff am Siedepunkt desselben (-196°C), messen. Bei dem hier verwendeten photokatalytisch aktiven Material beträgt die spezifische BET-Oberfläche vorzugsweise wenigstens 30 g/m², vorzugsweise mehr als 60 g/m². Die maximale spezifische Oberfläche beträgt vorzugsweise etwa 350 g/m², insbesondere maximal 250 g/m². Teilchen bzw. Partikel mit einer solchen BET-Oberfläche ermöglichen gute Reduzierungsraten bei insgesamt relativ geringem Materialaufwand.

Als photokatalytisch aktives Material wird vorzugsweise Titandioxid (TiO₂) verwendet. Das Titandioxid liegt dabei besonders bevorzugt in Form von Titandioxidpartikeln vor. Titandioxid hat sich als zumindest im Baubereich besonders gut geeignetes und vergleichsweise kostengünstiges photokatalytisch aktives Material herausgestellt.

Das photokatalytisch aktive Material wird zumindest in nahezu technischer Reinheit zugegeben. Das gilt insbesondere für Titandioxid. Technische Reinheit ist für die hier angesprochenen Zwecke völlig ausreichend. Gegebenenfalls kann auch auf niedrigere bzw. höhere Reinheiten zurückgegriffen werden, sofern dies der Einsatzzweck erfordert. Dies kann beispielsweise in speziellen industriellen Anwendungen oder auch im Forschungsbereich der Fall sein. Auch kann dies bei anderen photokatalytisch aktiven Materialien als Titandioxid der Fall sein.

Das photokatdlytisch aktive Material wird vorzugsweise pulverförmig zugegeben. Es handelt sich dabei insbesondere um ein trockenes Pulver. Somit kann eine möglichst gleichmäßige Verteilung erzielt werden. Um ein trockenes pholokatalytisch aktives Material zu erhalten, kann selbiges vor der Zugabe in dem Mischprozess getrocknet werden. Dazu eignen sich aus dem Stand der Technik bekannte Trocknungsverfahren. Damit kann ein Verklumpen durch Feuchtigkeit zumindest weitgehend verhindert werden.

Besonders bevorzugt wird wenigstens ein vorzugsweise weiterer Zuschlagstoff bzw. ein Zusatzmittel dem Mischprozess zugegeben. Bevorzugt erfolgt diese Zugabe vor Zugabe des photokatalytisch aktiven Materials. Als sogenannte Mehlkomzugaben weisen die Zuschlagstoffe bzw. Zusatzmittel bevorzugt aber nur durchschnittliche Größen von bis zu 125 µm auf. Es können aber auch größere Komabmessungen verwendet werden. Insbesondere kann es sich bei den Zusatzmitteln bzw. Zuschlagstoffen um unterschledliche Materialien handeln, die die Eigenschaften der Betontrockenmischung bzw. insbesondere des damit hergestellten Betons verändern können. Bevorzugt werden so Veränderungen des äußeren Erscheinungsbildes, wie insbesondere Farbveränderungen, aber auch Änderungen der technischen Eigenschaften, wie beispielsweise der Festigkeit, der Wasserbeständigkeit oder ähnlichem, ermöglicht. Demnach eigen sich beispielsweise Farbstoffe bzw. Farbpigmente als Zusatzmittel. Insbesondere kann auch Titandioxid als Farbstoff in einer vergleichsweise groben Kömung verwendet werden, die insbesondere derjenigen von Zement entspricht. Die Komgröße von Zement beträgt typischerweise mehr als 1 µm und liegt bevorzugt in etwa zwischen 1 µm und 125 µm. Damit ist der Farbstoff bevorzugt wesentlich gröber als der Photokatalysator. Vorzugsweise können auch Zuschlagstoffe zur Bewehrung, insbesondere als Faserstoffe, wie Glasfasern oder Stahlwolle, und/oder Stangen bzw. Gitter, insbesondere aus Metall bzw. Stahl, eingesetzt werden.

Das photokatalytisch aktive Material kann auch als sogenannte Schlämme, die auch als "Slurry" bezeichnet wird, zugegeben werden. Um eine Schlämme herzustellen, wird das photokatalytisch aktive Material insbesondere mit Wasser aufgeschlämmt. Dies bedeutet, dass eine verhältnismäßig geringe Menge Wasser zugegeben wird, um eine pastöse Konsistenz einzustellen. Dazu erfolgt noch eine gleichmäßige Vermischung bzw. Vermengung. Durch Zugabe als Schlämme kann ebenfalls eine gleichmäßige Verteilung des photokatalytisch aktiven Materials in der Betontrockenmischung erreicht werden. Vorteil hierbei ist, dass aufgrund des nur geringen Wassergehalts einerseits eine gewisse Anhaftung des photokatalytisch aktiven Materials an den übrigen Komponenten der Betontrockenmlschung erfolgen kann, andererseits aber einem Verklumpen entgegengewirkt wird.

Weiter bevorzugt wird die Betontrockenmischung zur Herstellung eines Betons, insbesondere eines Frischbetons, verwendet. Dazu wird bevorzugt eine Flüssigkeit zu der Betontrockenmischung gegeben. Bei der Flüssigkeit handelt es sich insbesondere um Wasser. Um einen Beton aus der Betontrockenmischung herzustellen, muss die Flüssigkeit folglich mit der Betontrockenmischung vermischt werden. Dies erfolgt in einer entsprechenden Mischvorrichtung, insbesondere einem der oben genannten Hochleistungsmischer. Nach Vermischung mit der Flüssigkeit wird die Mischung fest, da das Bindemittel für eine Vernetzung bzw. ein Abbinden in dem Material sorgt, was somit zu einem Aushärten des Betons führt. Besonders bevorzugt wird ein Formkörper aus Beton, insbesondere ein Pflasterstein, hergestellt. Dazu erfolgt während bzw. nach Zugabe der Flüssigkeit zu der Betontrockenmischung ein insbesondere gleichzeitiges bzw. anschlleßendes Vermischen und/oder Einfüllen der Mischung in eine Form. Diese Form gibt für den eingefüllten Beton eine äußere Form vor. Nach einem ausreichenden Abbinden des Betons kann der Formstein aus der Form entnommen werden und gegebenenfalls nach eventuell vorzusehenden Nacharbeiten, wie Entgratungen und ähnlichem, seiner Bestimmung zugeführt werden.

Ein bevorzugtes Ausführungsbeispiel der Erfindung wird im Folgenden näher beschrieben.

Bei photokatalytisch aktiven Pflastersteinen handelt es sich hier allgemein um Formsteine aus Beton. Für den Beton wird zunächst eine Betontrockenmischung hergestellt, die dann zu einem späteren Zeitpunkt mit dem notwendigen Hydratations- bzw. Prozesswasser zum Abbinden versetzt und vermengt wird.

Als Betontrockenmischung kommt in diesem Fall eine übliche sogenannte Betongrundrezeptur zum Einsatz. Diese beinhaltet im Wesentlichen ein Bindemittel, wie Zement, und einen Zuschlagstoff, wie Sand, vorzugsweise Quarzsand.

Dazu wird zunächst ein Betonmischer bzw. insbesondere ein Hochleistungsmischer zum Vermischen der aus mehreren Komponenten bestehenden Betongrundrezeptur bereitgestellt. In den Betonmischer wird zunächst der Zuschlagstoff eingefüllt. Dabei handelt es sich bevorzugt um den genannten Sand bzw. eine Sandmischung. Anschließend wird das Bindemittel hinzugegeben. Das Bindemittel ist in diesem Fall Zement. Um verschiedene Eigenschaften des Betons zu beeinflussen, wie beispielsweise die Festigkeit gegenüber Druck- und/oder insbesondere Zugbelastung oder auch das äußere Erscheinungsbild, also insbesondere die Farbgebung und ähnliches, können entsprechende Zusatzmittel bzw. Zuschlagstoffe hinzugegeben werden. Farbpigmente wie Titandioxid in grober, zementartiger Körnung sorgen für eine Einfärbung, Bewehrungen in Form von Fasermateriallen, wie Glasfasern oder Stahlwolle, aber auch Stahlzugaben in Stangen- bzw. Gitterform sorgen für erhöhte Belastbarkeiten, insbesondere gegenüber Zugkräften.

Bei dem photokatalytisch aktiven Material handelt es sich im vorliegenden Fall um Titandioxid (TiO₂). Das photokatalytische Material bzw. der Photokatalysator wird in diesem Fall erfindungsgemäß unabhängig vom Bindemittel dem Mischprozess zugegeben. Dies bedeutet, dass es erst zugegeben wird, nachdem das Bindemittel bereits im Mischer ist. Außerdem ist das Bindemittel bereits mit den übrigen Komponenten, Zuschlägen bzw. Zusatzmitteln durchmischt worden. Im optimalen Fall ist bereits eine zumindest nahezu gleiche Verteilung der einzelnen Komponenten im Mischprozess erfolgt, bevor das photokatalytisch aktive Material zugegeben und dann ebenfalls vermischt wird.

Der Photokatalysator kann hier einerseits pulverförmig oder andererseits als Schlämme (Slurry) zugegeben werden. Hier wird Titandioxid als Pulver oder Slurry aus Nanopartikeln verwendet Nach der Zugabe erfolgt die eigentliche Durchmischung. Eine Verwendung der sogenannten Hochleistungsmischer sorgt für eine besonders effiziente Durchmischung. Zur weiteren Verbesserung des Ergebnisses wird hierbei die Verwendung von Slurrys bevorzugt, da diese in den Hochleistungsmischern eine bessere Verarbeitung ermöglichen. Bei den Hochleistungsmischern handelt es sich um besonders effizient und schnell arbeitende Mischanlagen, die im Bereich der Betonherstellung nicht allgemein üblich sind. Die Hochleistungsmischer sind insbesondere aus anderen technischen Bereichen, wie insbesondere der kunststoffverarbeitenden Industrie bzw. auch allgemein der chemischen Industrie bekannt Es handelt sich dabei um besonders schnell laufende Mischer, mit denen sich aufgrund der starken und verschiedenen auf das Mischgut einwirkenden Kräfte besonders gute Durchmischungen erzielen lassen.

Titandioxid kann grundsätzlich auch als Farbpigment der Betontrockenmischung zugegeben werden. Dieses weist dann aber eine wesentlich größere Korngröße auf, was auch damit zu völlig anderen Eigenschaften führt. Die Korngrößen sind dabei typischerweise deutlich größer als 1 µm, nämlich insbesondere in der Größenordnung der Korngröße von Zement, also vorzugsweise zwischen typischerweise 1 µm und 125 µm. Titandioxid in dieser vergleichsweise groben Körnung neigt unter normalen Lagerungsbedingungen weder zur Aggregatbildung noch zum Verklumpen. Allerdings ist die effektive Oberfläche sehr gering. Die Aggregatbildung des Titandioxids in nanoskaliger Form dagegen wird hier effizient durch die erfindungsgemäße, erst nachträgliche Zugabe zu der Mischung nach dem Bindemittel verhindert.

Die Reduzierungsraten werden dabei signifikant gegenüber einer klassischen Trockenmischung mit einem photokatalytlsch aktiven Material erhöht. Bei der aus dem Stand der Technik bekannten Trockenmischung wird, wie oben beschrieben ist, der Photokatalysator dem Bindemittel zugegeben, bevor beides gemeinsam dem Mischprozess für die Betontrocketimischung zugeführt wird. Dies führt daher zu einer Herabsetzung der effektiven Oberfläche durch Verklumpen bzw. Aggregatbildung der Partikel des photokatalytisch aktiven Materials.

## Patentansprüche

1. Verfahren zur Herstellung einer photokatalytisch aktiven Betontrockenmischung, wobei die Betontrockenmischung als Betongrundrezeptur zur Herstellung von Beton, insbesondere für die Formsteinproduktion, aus mehreren Komponenten, insbesondere aus wenigstens einem Bindemittel, vorzugsweise Zement, und aus wenigstens einem Zuschlag- bzw. Füllstoff, vorzugsweise Sand, zusammengemischt wird, und wobei wenigstens ein photokatalytisch aktives Material der Betontrockenmischung zugegeben, insbesondere mit dieser vermischt wird, **dadurch gekennzeichnet, dass** das photokatalytisch aktive Material der Betontrockenmischung unabhängig vom Bindemittel zugegeben wird.

2. Verfahren nach Anspruch 1, **dadurch gekennzeichnet, dass** das photokatalytisch aktive Material der Betontrockenmischung erst nach Zugabe des Bindemittels, bevorzugt erst nach dem Vermischen mit dem Bindemittel, besonders bevorzugt erst nach dem Vermischen der, insbesondere aller übrigen Komponenten, zugegeben wird.

3. Verfahren nach Anspruch 1 oder 2, **dadurch gekennzeichnet, dass** das photokatalytisch aktive Material in Form von Teilchen bzw. Partikeln, bevorzugt Nanopartikeln, zugegeben wird, wobei vorzugsweise Partikel mit einer zumindest im Wesentlichen ähnlichen bzw. einheitlichen Partikelgröße verwendet werden.

4. Verfahren nach einem der vorhergehenden Ansprüche, **dadurch gekennzeichnet, dass** das photokatalytisch aktive Material bzw. die Partikel mit einer spezifischen Oberfläche (BET) von minimal etwa 30 g/m². insbesondere mehr als 60 g/m², bis zu maximal etwa 350 g/m², insbesondere maximal 250 g/m², verwendet wird bzw. werden.

5. Verfahren nach einem der vorhergehenden Ansprüche, **dadurch gekennzeichnet, dass** Titandioxid als photokatalytisch aktives Material verwendet wird, insbesondere in Form von Titandioxidpartikein.

6. Verfahren nach einem der vorhergehenden Ansprüche, **dadurch gekennzeichnet, dass** das photokatalytisch aktive Material in zumindest nahezu technischer Reinheit zugegeben wird.

7. Verfahren nach einem der vorhergehenden Ansprüche, **dadurch gekennzeichnet, dass** das photokatalytisch aktive Material pulverförmig, insbesondere als trockenes Pulver zugegeben wird, und/oder dass das photokatalytisch aktive Material vor der Zugabe getrocknet wird.

8. Verfahren nach einem der vorhergehenden Ansprüche, **dadurch gekennzeichnet, dass** wenigstens ein insbesondere weiterer Zuschlagstoff bzw. wenigstens ein Zusatzmittel, vorzugsweise ein Farbstoff und/oder ein Bewehrungsmittel, der Betontrockenmischung bzw. dem Mischprozess zugegeben wird bzw. werden, insbesondere vor Zugabe des photokatalytisch aktiven Materials.

9. Verfahren nach einem der vorhergehenden Ansprüche, **dadurch gekennzeichnet, dass** photokatalytisch aktive Material als Schlämme (Slurry) zugegeben wird, und/oder dass das photokatalytisch aktive Material, insbesondere mit Wasser, aufgeschlämmt wird.

10. Verfahren nach einem der vorhergehenden Ansprüche, **dadurch gekennzeichnet, dass** der Betontrockenmischung zur Herstellung eines Betons, insbesondere eines Frischbetons, eine Flüssigkeit, vorzugsweise Wasser, zugegeben wird und/oder mit dieser vermischt wird, und/oder dass ein Formkörper aus Beton, insbesondere ein Pflasterstein, durch Zugabe einer Flüssigkeit, insbesondere Wasser, zu der Betontrockenmischung, und vorzugsweise gleichzeitiges bzw. insbesondere nachträgliches Vermischen und/oder Einfüllen der Mischung in eine Form, hergestellt wird.
